# EUROPEAN PATENT SPECIFICATION

(11) **EP 2 131 536 B1**
(45) Date of publication and mention of the grant of the patent: **07.09.2011**
(21) Application number: 09158236.1
(22) Date of filing: 20.04.2009
(51) Int. Cl.: H04L 12/58

(54) **Communications framework using hand held devices**
Kommunikationsgrundstruktur unter Verwendung tragbarer Geräte
Cadre de communications utilisant des dispositifs portables

(30) Priority: 22.04.2008 US 46976 P; 13.02.2009 US 152452 P; 17.04.2009 US 425447
(43) Date of publication of application: 09.12.2009
(73) Proprietor: Amivox ehf., 103 Reykjavik (IS)
(72) Inventor: Torras Figueras, Erik, 221, Hafnarfjördur (IS); Gestsson, Arnar, 6000, Kolding (DK); Marteinsson, Birkir, 108, Reykjavik (IS)
(74) Representative: Barth, Stephan Manuel

(56) References cited:
- US-A1- 2003 018 726
- US-A1- 2005 210 112
- US-A1- 2007 094 337

## Description

The present invention relates to a hand held communication device according to the preamble of claim 1 and to a server adapted to receive at least one message from a communication device according to the preamble of claim 8, which both are known from US 2005/0210112 A1 and US 2003/0018726 A1.

### DESCRIPTION OF RELATED ART

Today, mobile applications are growing like never before. Mobile network operators are offering internet access via a mobile broadband and at the same time end user devices or mobile devices have an ever increasing computing capabilities and power. The document US 2005/0210112 A1 describes a system and a method for integrating multiple messaging systems. The system and the method for allowing a sender to use a generic message entry from all messaging systems include email, instant messaging, and the like. The user enters hereby the recipient's name and the message, and the dispatch server intelligently routes the message to the recipient using an appropriate messaging engine. Further, the document US 2003/0018726 A1 discloses an instant messaging process to be executed in a communication network including receiving message data according to an instant messaging or wireless device messaging protocol. The instant messaging process is characterized by the steps of sending a first instant messaging traffic from an instant messaging client to a dedicated server of the client using one protocol and further sending second instant messaging traffic from instant messaging client to the dedicated server using a different protocol.

In most countries, telecom operators offer their service after obtaining a license by the appropriate telecom regulatory authorities in that specific country or region. Some operators expand their offering on a multinational basis with local telecom licenses in each country they operate. Other mobile companies or service providers buy services or access from the license holders and become virtual network operators or light service providers, who utilize the infrastructure and operational licenses by the local partner operator (host network operator).

This structure of the telecommunication environment means that end users tend to have a local agreement with one operator who offers a service in the user's country or residence. The nature of this agreement typically reflects the commercial situation on the local market, which can be a monopoly, duopoly etc. Therefore, telecom services and prices in different markets can be extremely diverse. In most cases, no direct competition exists between two operators in two different countries or in two different markets.

For traveling users (i.e., users accessing mobile services under a mobile network code or service provider code different than their own mobile provider), connectivity is available via roaming agreements made by the home operator (HPLMN) and the visiting operator (VPLMN). Without this agreement, traveling users would not have access to the VPLMN and therefore would not be able to communicate with their devices. End user prices for communicating while in roaming are in most cases with an extremely high margin for the implicated parties and therefore very expensive to the end user. This has recently been addressed by different international regulators who, in some cases, have managed to put part of these prices a bit down for some specific markets. Despite these efforts the prices offered to roaming customers are still high and not competitive with the prices offered by a local operator to its customers.

Services like short message service (SMS), multimedia messaging service (MMS), calls and data channel connectivity while roaming, call interconnect and content access are dependent on bilateral agreements made between partner operators or operators with working agreements. For an operator to be able to offer SMS termination to another network, the two networks need to have a mutual agreement which in most cases is the roaming agreement. Similarly, a dedicated interconnect agreement needs to be established for MMS termination, another for data connectivity (GPRS roaming), another for IN (Intelligent network functions like real time charging, short number etc.), another for 3G access, etc.

In case an agreement is not in place for any of these items above, the service in question will not work between both networks (e.g., users from Operator A in Iceland are not able to send/receive MMS messages to/from operators in Spain if Operator A has not formalized the proper bilateral testing and agreements with the Spanish operators). This makes the end user very dependent on his/her operator to open channels to other operators for international communication.

Content access like ring tones, logos, games and other value added services (VAS) are in most cases bound to the operator offering the telecom service on the local market. The geographical locality of the telecom service provisioning has a number of drawbacks for the end users. Some of these are: a lack of international price and service competition; a variety of services that can be limited and in most cases with a little or no end user customization; a lack of connectivity to other mobile networks and therefore a lack of messaging termination availability which can limit the end user in the selection of a communication method (voice, SMS etc.); expensive roaming charges; and a lack of roaming connectivity

This monotone offering by the localized telecom operators is most often only driven by their own easiest way to profitability rather than serving the specific requirements of every end user.

At the same time, Instant Messaging (IM) is an IP-based (Internet Protocol) application that can provide real-time communication between people using a PC or Laptop. Mobile Instant Messaging (mobile IM) is the ability to engage in Instant Messaging services from a mobile handset. Mobile IM allows users to address messages to other users using an alias (or user name), enabling the sender to know when his/her "buddies" are available. The advantage of mobile IM is that messages are sent and received in real-time via mobile handsets in the same way as fixed IM services, but without the need to be attached to a computer.

In most cases, a mobile IM product may be a client running in the end user's mobile equipment that enables him/her to visualize the presence of the members in his/her community (buddies) and interact with them. Most mobile IM clients enable text messaging, and increasingly more and more solutions allow for audio and image messaging interactions. Typically, communication between mobile devices and PCs is also possible (i.e., the mobile user's buddy can be using a PC client such as Live Messenger from Windows).

A common problem for these mobile applications is the limited amount of information that can be provided to the mobile user at once given the small size of mobile devices (as compared to the traditional instant messaging environment in PCs). Another common problem for mobile instant messaging is the lack of spectral efficiency and data efficiency.

Mobile clients typically are based on standard internet protocols such as HTTP, XMPP or similar which aren't bandwidth efficient. These protocols were not designed taking into account wireless data constraints and cost issues. While they are very versatile, they also add significant redundancy and unnecessary data. Moreover, in most occasions, rich messaging data transmitted (audio, image, video) lacks optimization for wireless transport. Mobile IM's state of the art data inefficiency results in high and unpredictable data consumption, which often translates into a high bill to the end user and an increased load to the mobile data network resulting in less data available for other wireless data services.

Another limitation of today's mobile instant messaging solutions is that they don't allow direct and global addressing to other systems such as SMS, MMS, email or traditional voice telephony. Furthermore, most instant messaging communities do not allow connections with other instant messaging communities (i.e., a user from instant messaging community A cannot change messages with a user from instant messaging community B).

One aspect of the present invention is that it creates, for example, an environment where service providers can compete on price and message transmission on a global basis, thanks in part to the internet nature thereof. Another aspect of the present invention is that it creates multiple delivery channels and may offer global availability.

In yet another aspect of the invention, a part of the invention is based around improvements on messaging services and global access to content. For instance, the push to talk (P2T) service offered by Nextel in the USA is a localized service for users with dedicated devices. Meanwhile, Amivox, in one example, has invented a mobile instant voice messaging system, which has a global presence and is supported by the majority of all handsets available in the market today.

Public instant messaging solutions such as Microsoft's MSN Live messenger, AOL messenger or Yahoo messenger can as well be accessed from mobile phones. For example, with the help of Amivox's invention, a great data reduction can be accomplished for users of any such public instant messaging mobile clients by running them via the Amivox invention as a gateway to those communities.

Content providers or content owners often have few options to enter a market with their content given the tight control exercised by the established operators. With, for example, the invention of Amivox, a new content delivery channel may be opened for these content providers.

In another aspect of the present invention, new services which simplify the communication complexity and reduces the overall cost of communication for a typical end user may be realized.

This disclosure provides for embodiments of a hand held communication device comprising: a client capable of communicating with a server; the client with a user interface, the user interface capable of displaying at least one receiver; and the client programmed to send at least one message to the at least one receiver based on the at least one receiver's receiving capabilities.

The client may be programmed to propose message types based on the at least one receiver's receiving capabilities. The client can be programmed to automatically select message types based on the at least one receiver's receiving capabilities. The client may support multiple buddy classes. E.g. the client is programmed to support a dynamic buddy list (DBL). The DBL can also include filtering presence information based on frequency of contact with a receiver. One can contemplate that the DBL includes automatically adding a receiver to the DBL when the at least one message is sent. The client may send the at least one message based on a common denominator.

The message types are, for example, at least one of audio, video, text, or image content.

According to an embodiment of the hand held communication device the server includes at least one software entity programmed to accept the at least one message from the client and send the at least one message to the at least one receiver.

One embodiment of the hand held communication device further comprises an internal storage, wherein when the at least one message is composed in an offline mode the at least one message is stored in the internal storage. Further, the at least one message stored in the internal storage may be sent to the server when the client is in an online mode.

According to another embodiment of the hand held communication device the at least one message is sent some time after pressing a send button. The hand held communication device may be implemented such that the client is programmed to detect at least one receiver using a wireless pairing exchange technique.

This disclosure also provides for embodiments of a server adapted to receive at least one message from a communication device, the communication device including a client, the server comprising: at least one software entity programmed to accept the at least one message from the communication device; the at least one software entity programmed to transmit the message to at least one receiver, the at least one message composed by the client based on the at least one receiver's receiving capabilities.

In one embodiment of the server the at least one of a software entity connects the server to the client. The at least one of a software entity, for example, connects the server to the receiver.

The server can maintain a dynamic buddy list (DBL).

The communication device can be implemented as a hand held communication device.

The server may connect to the client and the receiver via the internet.

The before-mentioned aspects and features of hand held communication devices and servers can be combined in a variety of options. It is intended that any combination of features and/or aspects as disclosed above and in the following with respect to the drawings is recognized as the proposed communications framework by a person skilled in the art.

### BRIEF DESCRIPTION OF THE DRAWINGS

Fig. 1A is a diagram of an example system in which a communications framework may be used.

Fig. 1B is an example server which may be used in a communications framework.

Fig. 2 is an example hand held device showing a buddy list.

Fig. 3 is an example of the types of messages that a user may send to different receiver types.

Fig. 4 is a flow diagram of an example content selection process.

Fig. 5 is an example process of how a client may propose allowed content type.

Fig. 6 is an example of a store and forward of messages process.

Fig. 7 is an example of a refresh process of a user that operates in offline mode.

Fig. 8 is an example of a users buddy list and contacts.

Fig. 9 is a flowchart showing an example of automatic buddy addition.

Fig. 10 is an example of a user and the users filtered and non-filtered contacts.

Fig. 11 is a flow diagram of an example process in which a user's buddy list may be retrieved and filtered.

Fig. 12 is an example of a wireless pair exchange.

Fig. 13 is an example flow diagram of an example wireless pair exchange.

### DETAILED DESCRIPTION

For the purposes of this application, the following words may be interpreted to mean at least the following:

Amivox communication framework: the overall communication service..

Amivox service: Amivox communication framework.

Amivox system: Amivox communication framework.

Amivox technology: Amivox communication framework.

Application Program Interface (API): a method prescribed by a computer operating system or by an application program by which a programmer writing an application program can make requests of the operating system or another application.

Blogcast: a collection of digital media files which are distributed over the Internet, often using syndication feeds, for playback on portable media players and personal computers. The term podcast, like "broadcast", can refer either to the series of content itself or to the method by which it is syndicated; the latter is also termed podcasting.

Buddy: alias of a person or application with whom a user has established an electronic link for them to be able to communicate.

Call back: a process for a user to iriitiate one or several calls by instructing a call server to first call him back and subsequently call the remaining lines and bridging them together.

Client: dedicated software installed in an electronic device to run a certain application or a web client that accesses the application over a browsing session.

Front end: dedicated software installed in an electronic device to run a certain application or a web client that accesses the application over a browsing session.

Hyperlink: a reference or navigation element in a document to another section of the same document or to another document that may be on or part of a (different) domain.

Interactive Voice Response (IVR): a phone technology that allows a computer to detect voice and touch tones using a normal phone call. The IVR system can respond with pre-recorded or dynamically generated audio to further direct callers on how to proceed. IVR systems can be used to control almost any function where the interface can be broken down into a series of simple menu choices.

Man Machine Interface (MMI): a set of menus, menu structure, organization and means used by the client to communicate and transfer information to the user, and for the user to transfer information to the client and to submit input into the service.

Message board: a discussion board (known also by various other names such as *discussion group, discussion forum,* and *online forum*) is a general term for any online "bulletin board" where you can leave and expect to see responses to messages you have left. Or you can just read the board.

Message body: the contents of a message.

Message: digital content or any form of information.

Micro call: a telephone call that delivers a recorded audio message to the receiver.

MSISDN: telephone number of a mobile user.

Multimedia Messaging Service (MMS) - allows for non-real-time transmission of various kinds of multimedia contents, such as images, audio, and video clips.

Online: a user is online when his client or front end is connected to the server.

Podcast: a collection of digital media files which are distributed over the Internet, often using syndication feeds, for playback on portable media players and personal computers. The term podcast, like "broadcast", can refer either to the series of content itself or to the method by which it is syndicated; the latter is also termed podcasting.

Postpaid: a relationship between a user and the service provider whereby exists a billing and invoicing relationship

Prepaid: a relationship between a user and the service provider whereby the user pays in advance for the services

Presence: technology that allows the user to see who on their list is offline, who is online, who is online but away from their computer, who has their phone turned off, who has their phone turned on, or who is currently talking on their phone, etc.

Public instant message (public IM): an instant message software and service from a service provider such as Microsoft Live Messenger, AOL, Yahoo!, ICQ, Skype, Gtalk, etc...

Real time: an adjective used to describe an application that updates information at the same rate it receives data - analogous to a telephone conversation where both parties have the sense of being in the same room talking face to face.

Rich message: a message which content is text and/or image and/or audio and/or video, etc.

Server: A server side of an Amivox framework is an advanced communication platform built out of a number of key entities.

Short Message Service (SMS) - a service for sending messages to mobile phones that use Global System for Mobile (GSM) communication or other mobile networks systems that support SMS messaging.

Sponsoring: a relationship between a user and the service provider whereby the consumption of the user or part thereof is paid by a third (sponsoring) party.

Uniform Resource Locator (URL): a compact string of characters used to identify or name a resource. A URL may be a location of a file on the Web.

User Interface (UI): a set of menus, menu structure, organization and means used by a client to communicate and transfer information to a user, and for the user to transfer information to the client and to submit input into the service.

Virtual buddy: a buddy that is not a physical person but the alias towards a machine or application in an instant message service.

Voice over IP - a term used in IP telephony for a set of facilities for managing the delivery of voice information using the Internet Protocol (IP).

Words importing the singular may include the plural and vice versa.

Words importing a particular gender may include any gender.

### The Amivox Messaging Service

One aspect of Amivox's invention is the creation of a communication framework realized by means of, for example, a client (front end), a server software architecture and a number of dedicated software entities and modules running on the client and on the server side.

An Amivox communication service may have no connectivity boundaries as it is accessible over the public internet. Therefore, the service is not limited by the end users' geographical location, access method or by the selection of the home or serving operator. This is a great improvement to standard telecommunication services, which are home operator dependent and therefore limited by the interconnect agreements made by the operators. Such a limitation often affects users when a particular roaming service is not offered within a specific network or a country (for example, the largest mobile operators have 400-500 roaming agreements while there are more than 800 GSM networks established in the world.), or when an MMS or SMS message termination is not available between two networks.

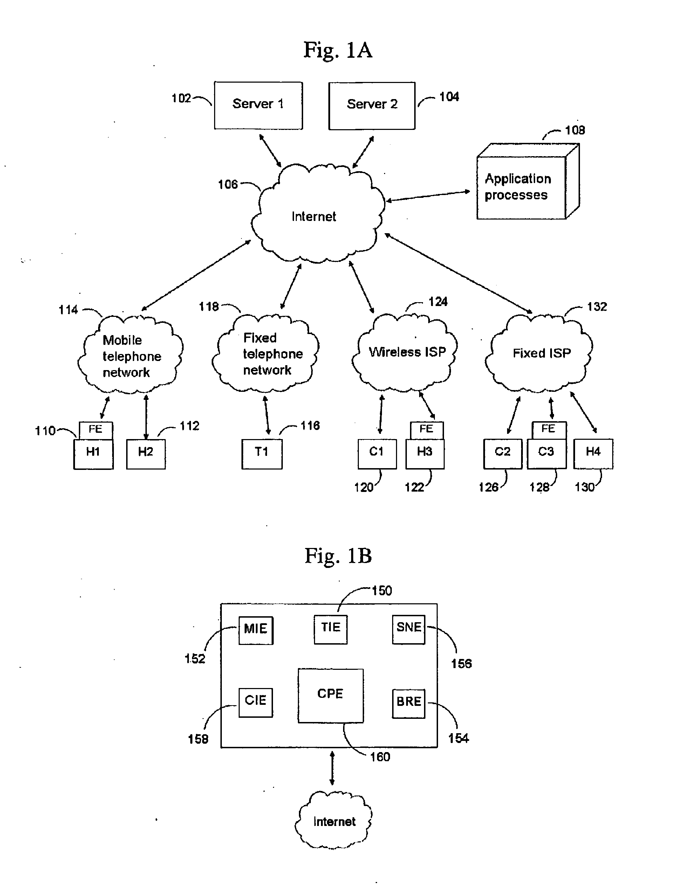

Referring to Figure 1A, an exemplary system in which the Amivox communication framework can be utilized is shown. Fig. 1A shows two servers 102 and 104 connected to the internet 106; a set of external application processes 108 connected to the internet 106; two hand held devices H1 110 and H2 112 connected to the servers 102 and 104 via the internet 106 and a mobile network 114 such as GSM/CDMA/PDC/etc.; a land-line telephone T1 116 connected to the servers 102 and 104 via the internet 106 and the public switched telephone network (PSTN) 118; a computer C1 120 and a third hand held device H3 122 connected to the servers 102 and 104 via the internet 106 and a wireless internet service provider (wireless ISP) 124 such as WiFi, public WiMax or UMA access points; and two more computers C2 125 and C3 128 and a fourth hand held device H4 130 that are connected to the servers 102 and 104 through the internet 106 and a fixed ISP network 132.

Although only a small amount of, and specific devices and their services are shown, this is merely for exemplary purposes. As such, any number or type of devices may be used access a variety of different services.

Some of the devices may contain, or access via a web browser or other means, a front end software (an Amivox software client) that enables an Amivox service framework (H1, H3 and C3 in the example in the drawing). Devices with the Amivox software client can access the complete portfolio of services and applications that the Amivox framework offers. They can establish communications with other devices with the Amivox software client as well as with devices that do not have the Amivox software client.

Those devices that do not contain or access the Amivox software client (H2, T1, C1, C2 and H4 in the example in the drawing) can still participate in the Amivox communication framework, initially as receivers of rich messages (messages with text and/or audio and/or image and/or video content) or call events and subsequently with a number of advanced communication offerings that are not accessible by traditional communications means.

### The Server

A server (often referred to as "the back end" or "the back end system") may be a software node placed on the internet layer. As shown in Fig 1B, the server's key software entities may include but are not limited to a telephone interworking entity (TIE) 150, a messaging interworking entity (MIE) 152, a billing and rate entity (BRE) 154, a service network entity (SNE) 156, a client interworking entity (CIE) 158 and a core platform entity (CPE) 160. Although the software entities are described herein as separate entities, one of ordinary skill would understand that the entities may be combined in any manner that may be appropriate.

A TIE 150 may be a module which interconnects an Amivox framework to all directly connected telephony network nodes. The TIE module 150 may receive communication commands, given by a user via the service front end, and may transcode these commands towards the telephony network for further execution. The TIE 150 uses a number of criteria to select the communication network. These criteria may be based on the type of procedure executed, (a call setup request, SMS message, MMS messages etc.) on user billing profile (postpaid, prepaid, sponsored etc.) on a least cost routing principle, fault status and other criteria important for correct execution of the user request.

A MIE 152 is a module which may interconnect with instant messaging networks like Microsoft Live Messenger (MSN), AOL, Yahoo!, G-talk, email, etc. The MIE 152 may handle the protocol translation between the front end and all integrated external instant messaging universes. Inside the MIE 152 may be the core handling of the Dynamic Buddy List (described further below) and the Community Aggregator (described further below).

A BRE 154 may be a module which handles all usage related billing and rating. The module 154 may store rate information for event usages, user account balance storing, handling and modifications. The BRE 154 may handle promotion schemes and all user and business related charging schemes. The BRE 154 may also handle event rating and billing processes for both real time and non real time charged events. Transactions with business rules handling revenue share and sponsorship may all be handled by the BRE 154. The BRE 154 may also connect to external payment and account top-up systems.

An SNE 156 module may connect an Amivox framework with external applications like web interfaces, central message store, third party services and any other application which complies to the interface required to communicate with the Amivox communication framework.

A CIE 158 may be a module handling the communication between the front end and the back end. The CIE 158 may authenticate clients, receive and send messages and commands from the front end towards the responsible entity within the back end.

A CPE 160 may be the "brain" of an Amivox communication framework. The CPE 160 may handle message transfers, store and update user settings and buddy relations, manage sub routine execution (for instance the billing process) and act as a hub for all information exchanges with other external entities.

### The Client

An Amivox client (often referred to as "the software client" or "the front end") may be a software code which can be installed in a device or which can be accessed from a device via a browser, and handles and interprets the communication with the servers or back end system. The software client can be installed in a hand held device such as, for example, the exemplary hand held devices illustrated in Fig. 1A. The software client may also be installed in any kind of personal computer such as a laptop computer or a stationary PC used in an office.

In one aspect of the invention, the main modules of a client may be a communication handler and a user interface. The communication handler may be responsible for handling transmission from a server to a client and vice versa. The communication handler may also send to the user interface information in an appropriate form to be presented to the user. A message handler may manage all communication with the server to guarantee connectivity, presence updates, message delivery and reception, management of a store and forwarding functionality when messages are composed in off-line mode, etc. The user interface provides the means for the user to access the different functionalities and menu options offered by the service.

An Amivox client may support the following unique functionalities that can be implemented in any desired combination:

A. Multiple buddy classes: as defined in "The Amivox messaging service" below. An Amivox client may include multiple classes of buddies in the buddy list; for example: Amivox users, public IM users (e.g., MSN Live messenger, Skype, Gtalk, Yahoo messenger, AOL messenger, etc.), email users, fixed phone users, mobile phone users, virtual buddies (aliases for application processes), etc.

B. A process by which a rich message can be sent to multiple receivers of multiple classes (Amivox users, public IM users, fixed phone users, mobile phone users, email users, virtual buddies, etc.) with one single click: as defined in "The Amivox messaging service" below

C. A Client's support of the Dynamic buddy list: as defined in "Dynamic buddy list" below.

D. A process by which messages can be stored and forwarded according to an Amivox client's preferences and settings, and according to network availability: as defined in "Store and forwarding of messages" below.

E. A process by which users can automatically establish buddy relationships with a short range radio: as defined in "Wireless pair exchange" below.

### The Amivox Messaging Service

Today's traditional instant messaging (IM) clients may contain buddy lists that include buddies of a single IM community or at most of some few IM communities. For example, a Skype user can only have Skype buddies in his buddy list. Other IM clients allow to aggregate instant message buddies from other IM communities (e.g., MSN Live messenger allows to have MSN Live messenger buddies and Yahoo messenger buddies in the same client and communicate with both communities indistinctively).

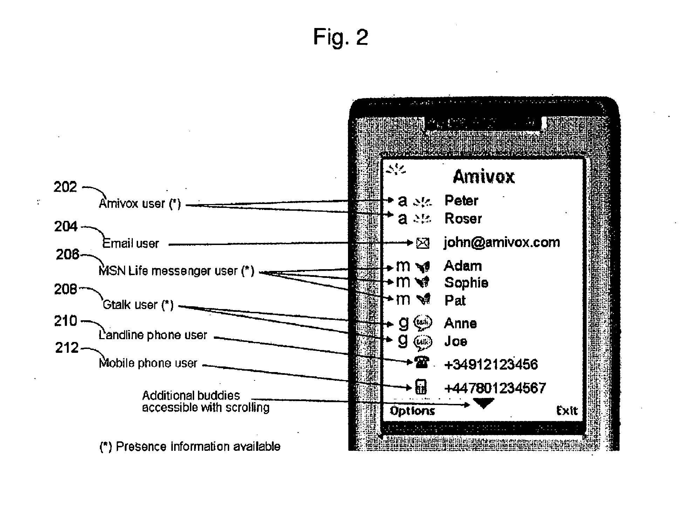

A buddy list in an example of this invention's client (the Amivox client) may enable the registering of many contact types, including non-instant messaging users. In the example in Fig 2 appear visible two Amivox buddies 202, one email buddy 204, three MSN Live messenger buddies 206, two Gtalk buddies 208, one landline phone buddy 210 and one mobile phone buddy 212. Additional buddies may become accessible by scrolling down the list. Other buddy classes included in an Amivox client could be buddies from other public communities such as ICQ, AOL messenger, Skype, Yahoo messenger, etc., virtual (application) buddies such as a company's help desk buddy, a message board buddy, etc., and buddy groups containing a blend of buddy types such as a buddy "Family" containing for example, the following buddies: Amivox buddy "mamma," Email buddy "john@amivox.com," AOL messenger buddy "Brita," Skype buddy "Peter," Landline phone buddy "grandma," Mobile phone buddy "Anni," Etc.

A user with the Amivox client can select one or several buddies to compose and send messages to them including text and/or audio and/or image and/or video content. The extent to which a user can compose messages with different content types (i.e., text input, audio recording, image capturing, video recording, uploading any of the previous content types from an internal or external memory, etc.) may depend on the device's capabilities. The client may be equipped with sufficient intelligence to automatically propose the allowed content types and delivery forms according to the recipient(s) class(es) as received from the server.

The server may receive from the client an information package, which may include message contents and destinations information. The server may be equipped with sufficient intelligence to route and transcode this piece of information to the different receiver types over the required links, i.e. instant messaging, SMS/MMS, email, phone call, etc.

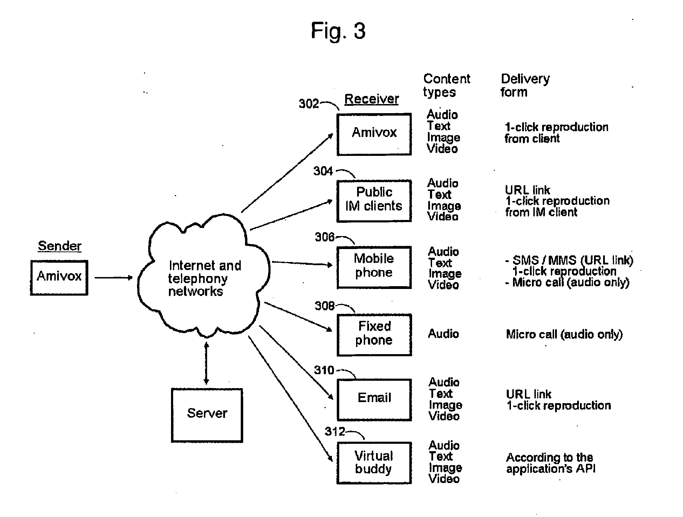

Fig 3 shows an example of the type of messages that a user of the Amivox software client can send to different receiver types:

Referring to Fig. 3, when a message is addressed to another Amivox software client 302, a sender can compose and send a text/audio/image/video message, and the receiver 302 may reproduce the content by selecting the received message. When a message is addressed to a user of a public IM client 304 (e.g., MSN Live messenger, AOL messenger, Gtalk, etc.), the sender can compose and send a text/audio/image/video message, and the receiver 304 may reproduce the content by selecting a URL embedded in the received IM message. In case the public IM client 304 supports such a functionality, received rich messages (a text/audio/image/video message) from an Amivox software client can be directly played/viewed upon receipt. When the message is addressed to a mobile phone user 306, the sender can decide to address the message as an SMS/MMS message and hence can compose and send a text/audio/image/video message, and the receiver 306 may reproduce the content by selecting a URL embedded in the received SMS/MMS message and downloading its content. The message may also be directly received and played/viewed upon receipt. Alternatively, the sender can decide to address the message as a micro call and hence can only compose and send an audio message, and the receiver 306 will listen to the micro-call when answering the incoming call. When the message is addressed to a fixed phone user 308, the sender can, for example, compose and send an audio message, and the receiver will listen to it when answering the incoming call. When the message is addressed to an email user 310, the sender can, for example, compose and send a text/audio/image/video message, and the receiver 310 may reproduce the content by selecting a URL embedded in the received Email message and downloading its content or alternatively, play/view the message directly upon receipt. When the message is addressed to a virtual buddy 312 (that is, a buddy that is not an alias to a person or group of persons but to an application), the sender can compose and send a text/audio/image/video message, and the receiving application 312 may process the message according to its API. When the message is addressed to a buddy group (not shown in Fig. 3 , that is, an alias grouping a blend of buddy types), the sender can compose and send the minimum common denominator of the options offered to the individual buddies within the buddy group.

Fig. 3 is shown for exemplary purposes only. One of ordinary skill in the art would acknowledge that additional content types may be added to devices and thus, for example, although a fixed phone 308 is described to accept only audio messages, the fixed phone 308 may also accept any other content type if the device is equipped to receive the message. In such a case, where a device has added content receiving capabilities, a client may be adapted to automatically propose the newly allowed content type to a user during the transmission of a message.

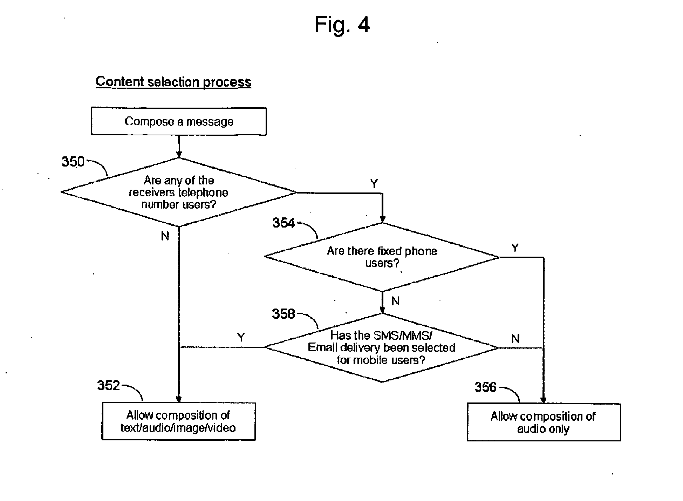

Fig 4 shows an exemplary flowchart process by which a client can automatically determine and propose an allowed content type when sending a message to a buddy group and according to the buddy types included in the buddy group.

As shown in Fig. 4, when a user composes a message to be sent to a receiver or a buddy group with the capabilities as shown in the example of Fig. 3, the client may determine at step 350 if the receiver(s) are telephone number users. If the receiver(s) are not telephone number users, based on the content types described in Fig. 3, the user may be allowed at step 352, to compose any type of message including text, audio, image, and/or video. However, if the receiver(s) are telephone number users, at step 354, the client may check if there are any fixed phone users. If any of the receiver(s) are fixed phone users (the common denominator), then the client may only allow the user to send an audio message at step 356. If there are no fixed phone users, then at step 358, the client may check if the user has selected SMS/MMS/Email for delivery to mobile phone users. If the option has been selected then the client may allow the composition of text, audio, image, or video at step 352. However, if the SMS/MMS/Email option has not been selected the user may only be able to compose an audio message at step 356.

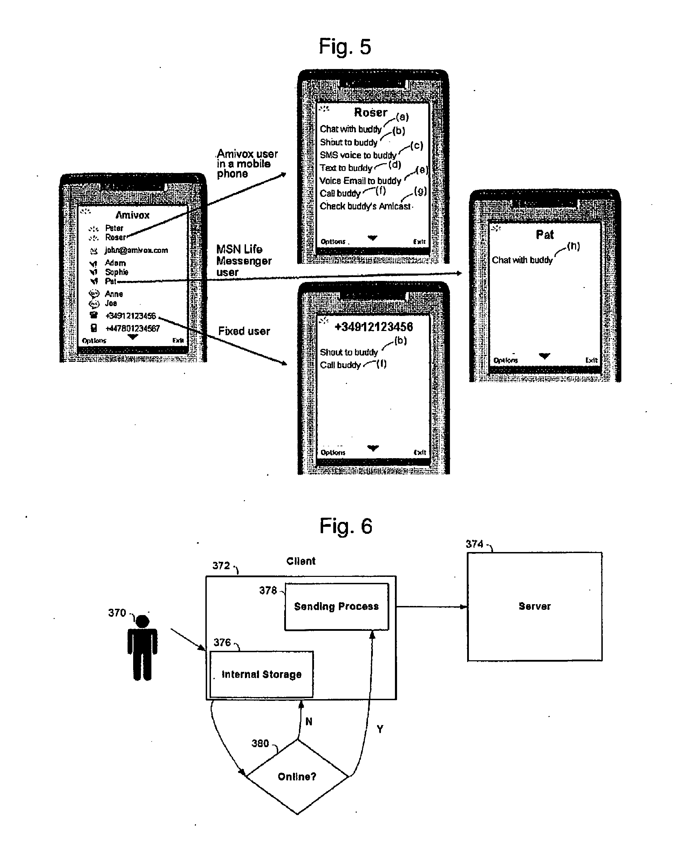

Fig 5 shows an exemplary process of how a client may automatically propose the allowed content type, delivery form and additional options according to the buddy selected. In this exemplary situation, if the sender selects "Roser" (an Amivox buddy in a mobile phone), the user may be able to execute the following actions: (a) compose and send a text/audio/image/video message to Roser's Amivox client, (b) compose and send an audio message to Roser as a micro call, (c) compose and send a text/audio/image/video message to Roser in a URL/hyperlink embedded in an SMS message, (d) compose and send a text message to Roser in an SMS message, (e) compose and send a text/audio/image/video message to Roser in a URL/hyperlink embedded in an email message, (f) place a call to Roser's mobile phone (either directly or as a call back action), or (g) check and access Roser's blogcasting.

Also in this exemplary situation, if the sender selects "Pat" (an MSN Live messenger buddy), he will be able to (h) compose and send a text/audio/image/video message to Pat in a URL/hyperlink embedded in an instant message to Pat's client. Also in this exemplary situation, if the sender selects "+34912123456" (a fixed phone buddy), he will be able to (b) compose and send an audio message to that telephone number as a micro call, or (f) place a call to that telephone number (either directly or as a call back action).

If more than one user is selected when sending a message, the content types automatically proposed may be the minimum common denominator of the allowed message types to all the addressed buddies. A man machine interface (MMI) of a commercial client implementation can be realized in several forms, but they may need to provide an automatic process to the end user. For example, if a specific MMI implementation makes a user select first the receiver users, the content type proposed after that selection may take into consideration the receivers' profiles and allow the content type that can be accepted by them all.

If a specific MMI implementation allows message composition prior to receivers selection, a client may notify if any of the recipients selected thereafter cannot process the composed content type. If a specific MMI implementation allows to add recipients prior to sending, the client may notify if the added recipient cannot process the composed content type. In the above cases, the MMI implementation may propose options such as (i) to remove incompatible recipients or (ii) to modify the content type so that all recipients can process it, or (iii) to send the composed message in full to those recipients who can process it and handicapped to those recipients who have limitations (e.g., transmit only the audio part of the message to the fixed telephone recipients).

The following are some exemplary cases of the automation of the message sending process:

Example A. when selecting as recipients an Amivox user, a fixed phone user and an email user, a client may automatically propose only audio capturing content type since this is the only one supported by one of the recipients (the fixed user). After pressing the send command, the server will submit the message to the Amivox user as an instant message transmission, to the fixed phone user as a micro call, and to the email user as an email with a URL/hyperlink embedding the audio message. Alternatively, the message may be attached as an audio file or may be transmitted by other means.

Example B. when selecting as recipients a public IM user and a mobile phone user, a client may automatically propose all capturing content types (text/audio/image/video) since both receivers support all content types. After pressing the send command, the server will submit the message to the public IM user as an instant message transmission with a URL/hyperlink embedding the message or alternatively may send a direct message to the user. The message may be sent to the mobile user as an SMS/MMS message with a URL/hyperlink embedding the message, as a direct message or as a micro call if the message was only of audio type and either the user or the administrator has defined audio-only messages to be submitted as micro calls to mobile devices.

Example C. when selecting as recipients an Amivox user and a fixed phone user, and a mobile phone user, a client may automatically propose only audio capturing since this is the only content type supported by one of the recipients (the fixed user). After pressing the send command, the server will submit the message to the Amivox user as an instant message transmission, to the fixed user as a micro call, and to the mobile user as a micro call.

Example D. when selecting as recipients an Amivox user and a mobile phone user, a client may automatically propose all capturing content types (text/audio/image/video) since both receivers support all content types. If the sender composes a video message and prior to sending it decides to add a fixed phone user to the recipients' list, the client will -according to its MMI implementation- either reject the recipient addition as incompatible with the message content type, or accept the recipient addition and ask the sender to change the message content to only audio type, or accept the recipient addition and deliver the full message to the Amivox recipient and to the mobile phone recipient but only the audio part thereof to the fixed phone recipient, etc.

In an alternative, when sending a message to multiple users, the message may be sent in multiple formats. For example. When selecting as recipients a fixed phone user and a public IM user, a client may propose sending multiple message formats. The user may then record an audio message and a micro call may be sent to the fixed phone user. Using software such as voice recognition software, which is known in the art and not described further, the micro call may be transformed into a text message and be sent to the public IM user. Other forms of conversions may also be used.

One aspect of this invention allows for, example, a user of an Amivox software client, either using any kind of a mobile/wireless/cordless hand held device or a computer device, to send a message with a one-click action to multiple platforms and systems: to other hand held/computer devices with the Amivox software client as an instant message; to mobile phones as an SMS message, to mobile phones as an MMS message; to mobile phones as micro call; to fixed phones as a micro call; to public IM users as a URL embedded in the instant message; to email users as a URL embedded in the email message; or to application processes as a message compatible with the application's API.

A user, when deciding to compose a message may select the combination of buddies (receivers) that are to receive that message. The client/server system may automatically propose the content type allowed and distribute it over the appropriate routes. In case the client implementation is such that the user composes the message first and selects the recipient buddies next, the client can let the user know if any of the recipients cannot process the content type (for example, an image message addressed to a fixed telephone buddy) and propose the appropriate actions (e.g., remove the buddy from the distribution list or alter the message contents to the minimum denominator accepted by the recipients).

### Store And Forwarding Of Messages

One aspect of the present invention provides a method and a system for allowing the storing and forwarding of a rich message when a recipient becomes available. This, along with the provisioning of presence information throughout the communication (described further below), may allow users to know beforehand whether a message sent will be delivered right away by the receiver(s) or whether it will get stored awaiting for him (them) to become online again. Likewise, when the user's client is disconnected from the server (i.e., offline), the user can still compose content and send it to the intended recipient(s). In this case, the client will store internally the content and immediately submit it to the server when connection has been established again with the server as depicted in Fig 6.

Mobile carriers may employ different methods, technology and policies for charging wireless data usage. Many mobile operators apply charging increments based on steps of 1KB, 10KB, 50KB or even 100KB. This means, sessions that transmit very little amount of data volume (e.g., text or short voice messages) are nevertheless charged as if they had transmitted the minimum of 1KB up to 100KB. Some operators, in addition to the data volume-based billing, also apply a time-based charge to all wireless data sessions. The wireless data cost increases dramatically when a user is roaming in another country, whereby the costs are typically multiplied. Therefore, some users may decide to operate in a disconnected (off-line) mode in order to save money by limiting the amount and extent in time of their wireless data transmission.

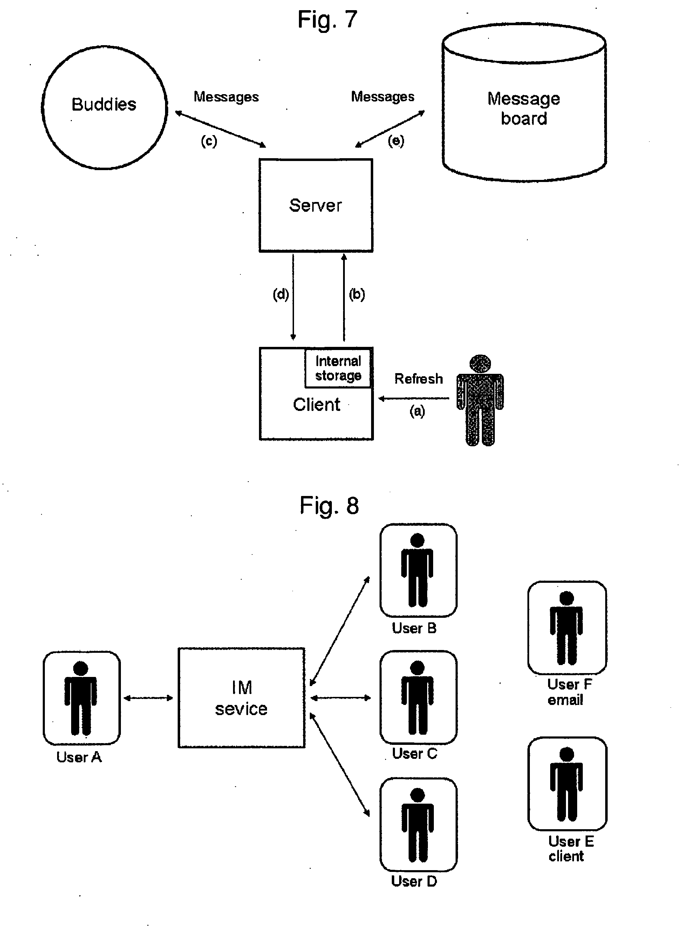

Fig. 6 shows a user 370 operating a client 372 in communication with a server 374. The client 372 may include internal storage or memory 376 and an algorithm shown generally by a sending process 378 and an online decision block 380. The user 370 may generate messages while a buddy is offline, while there is no service connection, or while generating messages to send based on a service operators usage charges. The messages may be stored in the internal storage 376. At block 380 if the specified buddy comes online, mobile service returns for the user, or the user decides he wants to send the message block 378 transmits the message to the server 374. The server 374 may then process the message and transmit it to the specified receiver as described in the example of Fig. 7.

As shown in Fig 7, when a user that is operating a client in offline mode activates a refresh functionality (a), all stored messages in the client will be delivered at once to the server (b) for further processing. At the same time, any messages sent to the user while he was disconnected (c) -and hence stored in the server- will be downloaded into the client (d) at once. Likewise, upon activation of the refresh functionality (a), all changes made to any other communication profiles or messaging forums to which the user is active through the Amivox software client will be automatically updated in the user's client (e). Thus, a user may decide to compose a number of messages while he is in offline mode and subsequently connect to the server in order to get all messages submitted at once from the client to the server and to receive at once any pending messages stored in the server. This offline manual operation mode may allow users to save significant cost in their communication, especially when the mobile operator that is serving them charges according to some time-based parameter(s).

In case the client automatically disconnects from the server (e.g., a mobile user running out of radio coverage, after a time-out set by the client or server, etc.) the UI of the client can notify the user with an acoustic sound and/or a vibration and/or a visual message and offer a reconnect option to the user. The client can propose to the user a direct reconnection to the server. Likewise, the user or administrator can set the client to automatically reconnect to the server in case it disconnects. This way, once the client detects that it is in the disconnect state it will make successive attempts till it resumes connection to the server.

One aspect of the present invention provides a method and system for allowing a transmission of rich messages from and to wireless devices that minimizes the likelihood and intensity of head radiation. The client can be set to only transmit the rich message some time after the user has pressed the send button. Thus, radio transmission will only occur with some delay and hence when users have naturally placed the device away of their heads (the most radiation sensitive area of a human). Therefore, in one example, the present invention can be a suitable communication alternative to the younger sector of society, whereby kids and youngsters are recognized as, potentially, the most sensitive parties to radiation exposure.

### Dynamic Buddy List

A buddy list is a known term among instant messaging users. The most common understanding of this term is the list of friends (buddies) that a user can view from his instant messaging client and where he can follow the presence information (on-line, off-line, away, busy etc.) of each of them.

Generally, for two buddies to appear in each other's buddy list, a mutual buddy acceptance must take place. Such an acceptance is usually based upon a buddy request from one user, which then is accepted by the other user. From that moment there is a buddy relationship established between the two of them.

When a user logs into an IM server with his traditional IM client, the buddy list is downloaded and displayed in the client. While the user is online (connected to the IM server) the client can send/receive messages to/from other buddies and constantly display presence changes of all buddies in the list.

A device with, for example, Amivox's front end (e.g., hand held H1 in Fig 1A) can be programmed to include other features unique to the present invention. For example, it can be programmed to support the dynamic buddy list (DBL) operation. DBL is a new type of IM buddy list. The key difference of the DBL compared to a standard buddy list is (i) a new buddy relationship structure, (ii) a new methodology that provides higher data and spectral efficiency, and (iii) a visual optimization of a buddy list in small displays.

### The DBL Relationship Structure

The buddy relationship structure in the DBL creates a new and innovative bridge between the mobile telephony universe and the traditional IM universe. In a DBL coexists several buddy classes:

Basic buddies: buddies who are in the same community as the DBL user, sometimes referred throughout this document to as non-Public IM buddies.

Virtual buddies: buddies related to application processes that represent specific services (e.g., the alias for the messaging help desk of a service company or the alias to deliver voice blogs to a blog site), sometimes referred throughout this document to as non-Public IM buddies.

Public IM buddies: buddies from public IM services like MSN Live messenger, AOL messenger etc.

Presence free buddies: other contact types such as email addresses, fixed phone or mobile phone numbers which may not support presence information, sometimes referred throughout this document to as non-Public IM buddies.

According to the DBL logic, when a user sends/receives a message or communicates with any buddy or with any contact which is not already in his DBL, this contact gets, in general terms, automatically added to the DBL. This automatic addition process to the DBL happens both for any communication initiation from a user (sending an instant message, sending an email, sending an SMS/MMS, placing a call, etc.) as well as for any reception from that new user. Within the DBL, no buddy acceptance is generally required between two basic buddies (basic buddy class).

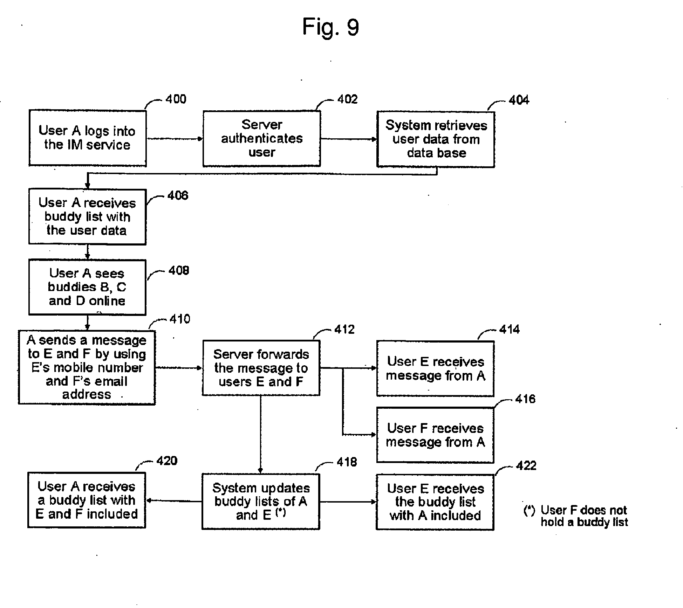

Fig 8 shows six users, five of which are instant messaging users and one (user F) is a traditional email user. As it can be seen in that figure, user A has no existing buddy relationship with users E and F. When user A sends a message for the first time to user E (who is not a contact of user A and therefore not in his DBL), user E may be automatically added to the DBL of user A as shown on the flowchart of Fig. 9.

Referring to Fig. 9, user A logs onto an IM service at step 400. At step 402 user A is authenticated and at step 404 the system may retrieve user data which may include any preferences set by user A. At step 406 user A may receive his buddy list with the user data. At step 408, and referring to Fig. 8, user A may see buddies B, C, and D on-line which user A has preexisting buddy relationships with. If user A decides to send a message to users E and F -which he is not buddies with- user A must have beforehand the contact information for E and F. If the aliases of the users of an instant messaging community are their telephone numbers, user A will be able to send an instant message to user E as long as user A happens to know user E's telephone number. This is equivalent to user A being able to send an SMS message to user E because he simply knows his telephone number. According to the DBL logic, and except if either user A or E has established some filtering protections, after that initial communication from user A to user E, each user will see the other buddy's alias automatically appear in his DBL.

In the case of Fig. 9, user A may send a message to user E using E's mobile number and user F using F's email address at step 410. At step 412, the server may forward the message to user E and F. At steps 414 and 416 users E and F receive the message from user A. At step 418, depending on user preferences, the system may update the buddy list of users A and E. At steps 420 and 422 the buddy lists of users A and E are automatically updated with the new users. From that moment, the presence information from user E is provided to user A (the sender of the message). If user E (the receiver of the message) is also a DBL user, the presence of user A will be automatically provided in E's DBL. In this example, user F, which is denoted only by an email address, does not hold a buddy list and therefore is not updated. However, in some cases, the contact list of user F may also be updated with contact information for users A and E.

To prevent misuse of this automatic feature, a user has the possibility to manage the DBL function according to his own preferences. In the client's settings menu, users can easily configure the settings regarding their DBL buddy interactions:

A user can select to simply add buddies to his DBL without having to receive or send any message. This action can be done to access information about the presence of that buddy.

A user can select to block all interactions from "unwanted" buddies by creating a blacklist in the server. This action effectively blocks unwanted buddies from having access to the buddy's presence.

For further control, a user can select a white list-based DBL, which requires all buddy acceptance to be done manually i.e. buddies are not added automatically to his DBL and they require the prior authorization of the user to add him to their DBL.

A user can retrieve a list of all users that have access to his presence information.

Users can block unwanted buddies from terminating any messages to their client and thereby never receive presence information from them. This is especially important to prevent spamming.

### Data Efficiency And Small Display Adaptation

The number of users utilizing instant messaging has grown tremendously over the last few years. A typical user has an ever growing network of buddies and therefore the size of a traditional buddy list has grown from what used to be 4-10 buddies a few years back to several dozens or even hundreds of buddies in multiple communities.

Displaying and updating a buddy list of dozens of buddies, whereby buddies are frequently changing their presence status (from offline to online to away to online to busy to offline to...), requires a significant data bandwidth. Furthermore, for a user to be able to have an overview of his buddy list, he needs a big display like on a standard PC.

When users access their IM services (originally created for a "PC universe" such as MSN, Yahoo etc.) from their mobile devices, their data consumption can grow tremendously given the constant presence updates of their long buddy lists. Even worse is the lack of a buddy list overview with 20-200 buddies constantly changing presence, while a typical mobile device display is only 3-4 inches high.

In a real world example, most users only communicate with a limited number of friends on a daily basis. Typically, the most frequent and repeated communication takes place among the closest circle of friends and family. An example could be a user with 70 buddies in his buddy list. On an average daily basis, he only communicates with 5-6 buddies. With a typical IM client, the server is constantly updating the client upon all presence development of the 70 buddies. Assuming that from the 70 buddies in the list, 40 are regularly changing their presence. The presence updates of at least 34-35 of these buddies will have no influence on the communication pattern of the mobile IM users. Therefore those information updates result in a waist of bandwidth and hence money to the user.

The DBL feature simplifies the interface for the end users by only populating the DBL with contacts and presence information of those buddies who are most relevant or most frequently communicating with the user. Yet, those buddies that drop out from the DBL view are still easily accessible. A user with a DBL active can, at any time, access his complete unfiltered buddy list from the server. This allows users to send messages to other users with whom communication is not frequent enough to keep that buddy within the DBL view. In this case, a dedicated sub menu in the client, is available for the user to retrieve all his buddies and their presence information. It is important to mention that the presence of those buddies that have dropped out from the DBL view is not updated to the client, which results in no presence data transmitted between the client and server for those buddies.

The DBL feature simplifies greatly the user's buddy list view in the client. Instead of a long list of all types of buddies, only the most relevant buddies are shown. The major implication of this methodology is that the user won't be troubled with irrelevant changes of presence and most significantly, that the user will save money and battery life thanks to minimizing the amount of wireless data traffic.

For the DBL implementation a server may play a key role in building the correct DBL. The server executes all data processing and filtering from the unfiltered buddy list. From a menu within the client a user can configure a number of settings in the server, to build up the DBL logic for his client. These selections may be:

Time-span setting. If there has been no any activity with a particular buddy over that period, the DBL will automatically remove the non-active buddy from the DBL.

Frequency setting. The user can configure the number of interactions (communication actions) over a given period required to maintain a buddy in the DBL.

Maximum number of buddies shown in the DBL. The user can set the maximum number of buddies displayed in the DBL.

Freeze buddy presence. In case a user wants to keep a buddy perpetually in the list but not receive his presence updates.

Freeze buddy in list: In case a user wants to keep a buddy perpetually in the list and providing his presence information.

Filter the type of buddy. A user can configure to only populate the DBL with specific types of buddies (e.g., only MSN Live messenger buddies).

Turn on/off the DBL function.

In case the user does not select any of these settings, a default system or group configuration may be applied.

In the connectivity between a DBL and public IM communities (e.g., MSN Live messenger, AOL messenger, Yahoo messenger, Gtalk, etc.), the server may act as a proxy between the client and the public IM community server. Once the user has provisioned the required authentication data, the server may log into the relevant public IM communities under that user's credentials. From that moment, the DBL user appears online to his public community buddies, but at the same time the DBL entity filters all irrelevant information towards the DBL user. Buddies within the external IM communities can follow the presence and exchange messages with the DBL user from their standard public IM client and without necessarily noticing that the DBL user is not using the standard public IM client.

The server forwards towards the DBL user all messages originated from the external IM communities, but according to the DBL settings, only updates the user's DBL with presence information of those public IM buddies that are relevant according to the DBL filter selections.

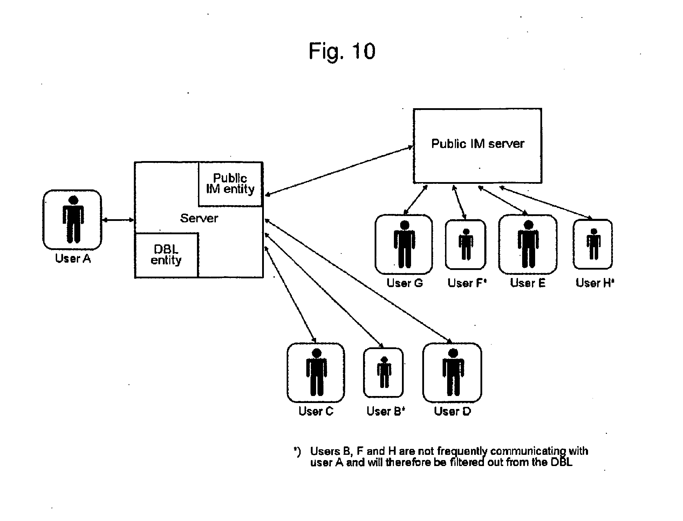

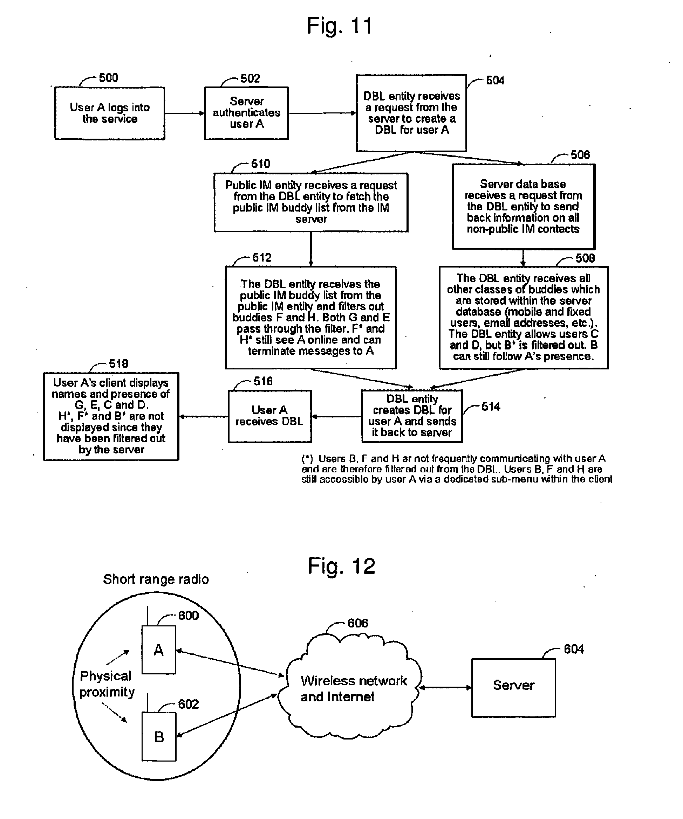

At any time, a DBL user can access from a menu in the client all his buddies (basic buddies, service buddies, public IM buddies, presence free buddies) that have been filtered out of the DBL. Fig 10.a shows user A with an Amivox client connected to a server and with an existing buddy relationship with users G, F, E and H (via a public IM community) and with users B, C and D (not via a public IM community). The server's DBL creation process for the user A in Fig 10 is shown on the example flowchart of Fig 11.

Referring to Fig. 11 with reference to Fig. 10, at step 500 user A may log into a service. At step 502 using known methods and as described above, a server may authenticate user A. At step 504 a DBL entity may receive a request from the server to create a DBL for user A. As described above, the DBL may be preprogrammed by the user with specific settings or may be a default configuration. In the example of Fig. 10, at step 506 the server database may receive a request from the DBL entity to send information on all non-Public IM contacts, such as users B, C, and D. At step 508, the DBL entity may receive all other classes of buddies which may be stored in the server database. Since, in the example of Fig. 10, user B is not a frequent communicator according to user A's DBL filtering settings, user B may be filtered from the DBL. However, user B can still follow user A's presence in case he does not have a DBL or given that his DBL settings allow for it.

Meanwhile, at step 510 the Public IM entity may receive a request from the DBL entity to fetch the public IM buddy list from the IM server. Similar to step 508, the DBL entity may receive the public IM buddy list from the public IM entity and filter out non-frequently communicating users F and H according to user A's DBL filtering settings while users G and E are not filtered. Users F and H, however, may still follow user A's presence information. At step 514, the DBL entity may create a DBL for user A based on the filtered and non-filtered information and may send the DBL back to user A. At step 516 user A may receive the DBL and at step 518 user A's client may display the DBL with the names and presence information for the non-filtered users while hiding the filtered users.

Although the DBL entity is described above as residing in a server, one of ordinary skill would understand that the DBL entity may reside in other parts of the system including the hand held device.

With this method a great optimization of the data transfer is archived without any degradation of the service quality to the user. On the contrary, the user enjoys a streamlined view of the buddy list with only those buddies that matter most to him.

### Wireless Pair Exchange

Today's instant messaging networks are, in most cases, used between two or more distant users sitting in front of a computer or operating their instant messaging clients from mobile phones or PDA devices. To create a new buddy relationship between two users, one of them needs to do one of the two following actions (i) make a search of the other buddy within the application's network (e.g., in the application's directory after the name or email address), or (ii) receive the other person's community contact details (unique user name or alias) via for example an email or SMS message or have memorized the other person's contact details to be able to set up the relationship.

This procedure to create a new buddy relationship is not optimal for users operating instant messaging clients with wireless devices. Relative to computers, wireless devices have limited text input capabilities, smaller displays and therefore support poorly the buddy addition process traditionally used with computers. In a typical example, two friends who are in physical proximity and decide to add each other as buddies should have the means to do so without having to access dedicated menus and enter text into the client.

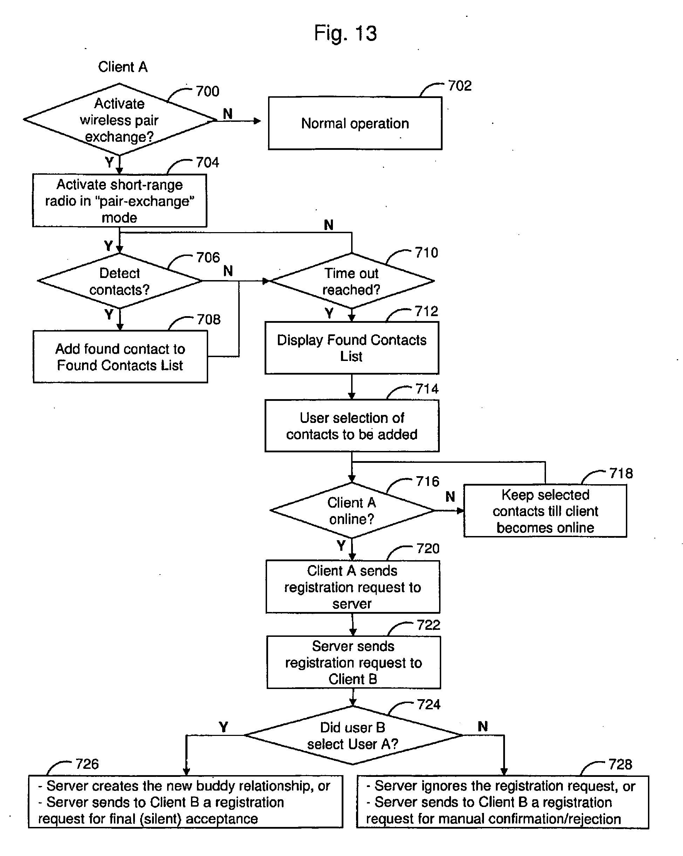

In one aspect of the present invention, two wireless devices brought to physical proximity can exchange buddy authentication and permissibility in a very efficient and user friendly manner. As shown in Fig 12, a user can, at any time, set his front end into a wireless pair exchange discovery mode to detect other users who are in physical proximity (within the range of the short range network supported by the device) and who have as well activated the a wireless pair exchange discovery mode at the same time (shown as client A 600 and client B 602). This action in the client activates the short range radio technology supported by the device (e.g., Bluetooth, WiFi, Zigbee, UW, RFID, etc.) in a mode supporting the wireless pair exchange discovery process. The discovery mode may automatically stop after the specified time out (e.g., 10 seconds) and presents to the user a list with the contact details of the nearby users that have been detected in the same "wireless pair exchange" mode. An example flowchart of a wireless pair exchange as shown in Fig 13.

Referring to Fig. 13 with reference to Fig. 12, at step 700 client A may check if the wireless pair exchange is activated. If it is not activated then at step 702 client A 600 operates under normal conditions as described above. If the wireless pair exchange is activated, at step 704, a short-range radio in pair exchange mode is activated. At step 706 client A may detect if there are any contacts within range. If any contacts are found then at step 708 they may be added to a found contacts list. Client A may be programmed to detect contacts for a specified time. At step 710 if the specified time has not finished client A 600 may continue to detect for contacts. However, once a time out is reached, at step 712 the found contacts list with all contacts detected may be displayed. At step 714, user A can choose from the Found Contacts List which buddies to add as a buddy. Assuming that user B 602 has been detected by client A 600 and that user A 600 has selected user B to be added as a buddy, Client A may send to a server 604 (Fig. 12) via the internet 606 an add buddy request of user B 602 if client A is online as shown in step 716. In case Client A is in off-line operation at step 718, the add buddy request transmission will be postponed till Client A 600 resumes connection with the server 604, at which point it will be sent automatically as shown in step 720 and 722. At this point, one of the following two processes can happen:

In the case that user B has already sent an add buddy request of user A to the server, the server can handle the requests in two different ways: (i) automatically create the new buddy relationship on the server, or (ii) trigger a traditional client-confirmed transaction, whereby Clients A and B receive the respective registration requests for final acceptance (such acceptance can be implemented to happen automatically and silently to the user) as shown in step 726.

Should user B not have sent an add buddy request of user A (e.g., because user B doesn't want to add user A as a buddy despite of having received his contact details in the Found Contacts List), the server can handle the request in two different ways: (i) automatically ignore the add buddy request sent by user A, or (ii) send a traditional registration requests to user B for manual confirmation/rejection of user A's request as shown in step 728.

In this case users do not need to perform searches or enter any text in order to add nearby users as buddies, nor do they need to accept/reject registration requests after executing a wireless pair exchange action and selecting the users they want to add as buddies.

In the case that a client is not connected to the server during the wireless pair exchange process, the discovered and selected contacts will be stored in the client and they will be sent to the server for further processing as soon as the client becomes on-line. This means that buddies can also exchange information while they are not under coverage of a wireless carrier network. Such behavior allows the user to create relationships while in off-line mode, and later update the server.

Additionally, buddy communities can be easily created without the need to invite and accept one by one all members in a matrix. For example, students in a class can establish the class community by simply activating the buddy acceptance wireless procedure (wireless pair exchange) at once while they are in class.

For those instant messaging systems that do not require a central server to maintain the buddies relationships, the wireless pair exchange process can be implemented without the involvement of a back end server by registering the discovered buddies directly in the device.

A typical hand held device may include a program memory in which various sets of instructions are stored that, when executed by a central processing unit (CPU), allow the hand held device to function. Such hand held devices may also include a data storage memory (e.g., an external hard disk drive or memory card) that is operatively coupled to the CPU, as well as a speaker and a microphone that are connected to the CPU to allow audio signals to be played or recorded by a user. Such devices also include an antenna (e.g., a Bluetooth antenna and a standard cellular multi-band antenna) and a display, both of which are operatively coupled to the central processing unit.

One aspect of the present invention is that a user can cause the Amivox client to be downloaded into the program memory and then installed so that any combination of the functionalities disclosed herein can be utilized when desired.

In one aspect of the present invention provides a system and method for sending at least one message to at least one receiver including a client communicating with a server over the internet for example as shown in Fig. 1A. The client may also be programmed to send the at least one message to the at least one receiver based on the at least one receiver's receiving capabilities for example, audio, video, text, or image content. Although only audio, video, text, and image content is described, one of ordinary skill would understand that any content that may be transmitted from a client and accepted by a receiver may be acceptable. The system and method may also include a server including at least one software entity programmed to accept the at least one message to the at least one receiver and the server transmitting the message to the at least one receiver over the internet such as for example, described in Fig. 1B.

Another aspect of the present invention provides a hand held communication device including a client capable of communicating with a server such as for example in figure 1A. The client may include a user interface, the user interface may be capable of displaying at least one receiver. The client may also be programmed to send at least one message to the at least one receiver based on the at least one receiver's receiving capabilities.

In an example, a hand held device such as one described in Fig. 1A may include a client capable of sending a message to multiple receivers. A user may, for example, send a text message to an email user, another hand held device user (e.g. a cell phone), and a fixed phone user. According to the example of Fig. 3, the fixed phone user may only be able to accept audio messages. In this case the client may automatically send the text message to the email and hand held device users, while asking the client user to record an audio message for the fixed phone user. Alternatively, the client may include software capable of automatically translating the text into audio content and then sending the audio content to the fixed phone user. Instead of automatically sending the message to the text capable users, the client may also propose to the user a different method of transmitting the message before the message is sent to all receivers.

Another aspect of the present invention provides a server that may be adapted to receive at least one message from a communication device. The communication device may be for example, a hand held communication device or a PC, as described in Fig. 1A. The communication device may include a client such as for example described above. The server may include at least one software entity programmed to accept the at least one message from the communication device. The at least one software entity may be programmed to transmit the message to at least one receiver wherein the at least one message composed by the client is based on the at least one receiver's receiving capabilities.

It is understood that the before-mentioned methods for operating hand held devices and/or communication frameworks or servers can be implemented in variety of way. In particular the disclosed devices, such as the mobile devices or servers can be implemented to execute the methods and processes as illustrated in Figures 4 - 13.

The foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the claims.

## Claims

1. A hand held communication device (110, 112) comprising:
- a client capable of communicating with a server (102);
- the client with a user interface, the user interface capable of displaying at least one receiver (302, 304, 306, 308, 310, 312) data;
- the client programmed to send at least one message to the at least one receiver (302, 304, 306, 308, 310, 312) based on the at least one receiver's receiving capabilities;
- the user interface capable of displaying a dynamic buddy list containing entries maintained by the server (102);
**characterized by**
- the user interface capable of displaying a frequency setting, wherein the user can configure a number of interactions required to include a particular entry within the dynamic buddy list;
- the client capable of filtering presence information of the dynamic buddy list based on a frequency of contact with the particular entry and the respective frequency setting; and
- the client programmed to propose message types to send to the at least one receiver based on the at least one receiver's receiving capabilities, wherein the message types proposed are based on a message content type.

2. The hand held communication device (110, 112) claim 1, wherein the client comprises means to send the at least one message based on a common denominator.

3. The hand held communication device (110, 112) of any one of claims 1-2, wherein the client supports multiple buddy classes.

4. The hand held communication device (110, 112) of any one of claims 1-3, wherein the client is programmed to support the dynamic buddy list.

5. The hand held communication device (110, 112) of claim 4, wherein the dynamic buddy list includes filtering presence information based on frequency of contact with a receiver (302, 304, 306, 308, 310, 312).

6. The hand held communication device (110, 112) of claim 4 or 5, wherein the dynamic buddy list includes automatically adding a receiver to the dynamic buddy list when the at least one message is sent.

7. The hand held communication device (110, 112) of any one of claims 1-6, wherein the client is programmed to detect at least one receiver (302, 304, 306, 308, 310, 312) using a wireless pairing exchange technique.

8. The hand held communication device of any of claims 1-7, wherein the message content type is at least one of audio, video, text, or image content.

9. The hand held communication device of any of claims 1-8, wherein the client is programmed to send the at least one message to the at least one receiver (302, 304, 306, 308, 310, 312) after a time delay.

10. The hand held communication device of any of claims 1-9, wherein the client is programmed to store the at least one message in memory when operating in an offline mode.

11. The hand held communication device of any of claims 1-10, wherein the at least one message stored in memory is sent when the client is connected to the server.

12. A server (102) adapted to receive at least one message from a communication device, the communication device including a client, the server (102) comprising:
- at least one software entity programmed to accept the at least one message from the communication device;
- the at least one software entity programmed to transmit the message to at least one receiver, the at least one message composed by the client based on the at least one receiver's receiving capabilities, wherein the at least one receiver's receiving capabilities are based on a message content type;
**characterized by**:
- the at least one software entity programmed to display a frequency setting, wherein the user can configure a number of interactions required to include a particular entry within the dynamic buddy list and to filter presence information of the dynamic buddy list based on a frequency of contact with the particular entry and the respective frequency setting.

13. The server (102) of claim 12, wherein the dynamic buddy list is maintained by the server (102).

14. The server of any one of claims 12-13, wherein the communication device is a hand held communication device of any one of claims 1-7.

15. The server of any of claims 12-14, wherein the message content type is at least one of audio, video, text, or image content.

## Patentansprüche

1. Handheld-Kommunikationsgerät (110, 112) umfassend:
- einen Client, der geeignet ist, mit einem Server (102) zu kommunizieren;
- den Client mit einer Benutzeroberfläche, die geeignet ist, mindestens einem Empfänger (302, 304, 306, 308, 310, 312) Daten anzuzeigen;
- den Client, der programmiert ist, mindestens eine Nachricht an den mindestens einen Empfänger (302, 304, 306, 308, 310, 312) basierend auf mindestens einer der Empfangsmöglichkeiten des Empfängers zu senden;
- die Benutzeroberfläche, die geeignet ist, eine dynamische Buddy-Liste mit Einträgen anzuzeigen, die vom Server (102) gewartet werden;
**dadurch gekennzeichnet,**
**dass**
- die Benutzeroberfläche geeignet ist, eine Frequenz-Einstellung anzuzeigen, wobei der Benutzer eine Anzahl von notwendigen Interaktionen festlegen kann, um einen bestimmten Eintrag in der dynamischen Buddy-Liste aufzunehmen;
- der Client geeignet ist, Präsenzinformationen der dynamischen Buddy-Liste basierend auf einer Kontakt-Frequenz mit der jeweiligen Adresse und auf der jeweiligen Frequenz-Einstellung zu filtern; und
- der Client programmiert ist, Nachrichtentypen anzubieten, welche an mindestens einen Empfänger basierend auf zumindest einer der Empfangsmöglichkeiten des Empfängers gesendet werden, wobei die angebotenen Nachrichtentypen auf einem Nachrichteninhaltstyp basieren.

2. Handheld-Kommunikationsgerät (110, 112) nach Anspruch 1, wobei der Client Mittel aufweist, um die mindestens eine Nachricht basierend auf einem gemeinsamen Format zu senden.

3. Handheld-Kommunikationsgerät (110, 112) nach einem der Ansprüche 1-2, wobei der Client mehrere Buddy-Klassen unterstützt.

4. Handheld-Kommunikationsgerät (110, 112) nach einem der Ansprüche 1-3, wobei der Client programmiert ist, die dynamische Buddy-Liste zu unterstützen.

5. Handheld-Kommunikationsgerät (110, 112) nach Anspruch 4, wobei die dynamische Buddy-Liste eine Filterung der Präsenzinformationen basierend auf einer Häufigkeit des Kontakts mit einem Empfänger (302, 304, 306, 308, 310, 312) umfasst.

6. Handheld-Kommunikationsgerät (110, 112) nach Anspruch 4 oder 5, wobei die dynamische Buddy-Liste ein automatisches Hinzufügen eines Empfängers zu der dynamischen Buddy-Liste umfasst, wenn die mindestens eine Nachricht zugesandt ist.

7. Handheld-Kommunikationsgerät (110, 112) nach einem der Ansprüche 1-6, wobei der Client programmiert ist, mindestens einen Empfänger (302, 304, 306, 308, 310, 312) über eine drahtlose Datenaustausch-Technik zu erkennen.

8. Handheld-Kommunikationsgerät nach einem der Ansprüche 1 - 7, wobei der Nachrichteninhaltstyp ein Audio-, Video-, Text- oder Bildinhalt ist.

9. Handheld-Kommunikationsgerät nach einem der Ansprüche 1-8, wobei der Client programmiert ist, die mindestens eine Nachricht an den mindestens einen Empfänger (302, 304, 306, 308, 310, 312) nach einer zeitverzögerung zu senden.

10. Handheld-Kommunikationsgerät nach einem der Ansprüche 1-9, wobei der Client programmiert ist, die mindestens eine Nachricht bei einem Betrieb im Offline-Modus in einem Speicher abzulegen.

11. Handheld-Kommunikationsgerät nach einem der Ansprüche 1-10, wobei die mindestens eine im Speicher abgelegte Nachricht gesendet wird, wenn der Client mit dem Server verbunden ist.

12. Server, welcher zum Empfangen mindestens einer Nachricht aus einem Kommunikationsgerät ausgebildet ist, wobei das Kommunikationsgerät einen Client umfasst, der Server (102) umfasst:
- mindestens eine Software-Einheit, die programmiert ist, die mindestens eine Nachricht aus dem Kommunikationsgerät zu akzeptieren;
- die mindestens eine Software-Einheit, die programmiert ist, die Nachricht an mindestens einen Empfänger zu übertragen, wobei die mindestens eine Nachricht durch den Client basierend auf zumindest einer der Empfangsmöglichkeiten des Empfängers zusammengesetzt ist und die zumindest eine Empfangsmöglichkeit des Empfängers auf einem Nachrichteninhaltstyp basiert;
**dadurch gekennzeichnet,**
**dass**
- die mindestens eine Software-Einheit programmiert ist, eine Frequenz-Einstellung anzuzeigen, wobei der Benutzer eine Anzahl von notwendigen Interaktionen festlegen kann, um einen bestimmten Eintrag in der dynamischen Buddy-Liste aufzunehmen und Präsenzinformation der dynamischen Buddy-Liste basierend auf einer Kontakt-Frequenz mit der jeweiligen Adresse und auf der jeweiligen Frequenz-Einstellung zufiltern.

13. Server nach Anspruch 12, wobei die dynamische Buddy-Liste vom Server (102) gewartet wird.

14. Server nach einem der Ansprüche 12-13, wobei das Kommunikationsgerät ein Handheld-Kommunikationsgerät nach einem der Ansprüche 1-7 ist.

15. Server nach einem der Ansprüche 12-14, wobei der Nachrichteninhaltstyp ein Audio-, Video-, Text- oder Bildinhalt ist.

## Revendications

1. Dispositif de communication portable (110, 112) comprenant :
- un client apte à communiquer avec un serveur (102) ;
- le client avec une interface utilisateur, l'interface utilisateur apte à afficher au moins une donnée récepteur (302, 304, 306, 308, 310, 312) ;
- le client programmé pour envoyer au moins un message à au moins un récepteur (302, 304, 306, 308, 310, 312) sur la base d'au moins une capacité de réception du récepteur ;
- l'interface utilisateur apte à afficher une liste d'amis dynamique contenant des entrées conservées par le serveur (102) ;
**caractérisé par**
l'interface utilisateur apte à afficher un paramètre de fréquence, dans laquelle l'utilisateur peut configurer un nombre d'interactions requises pour inclure une entrée particulière dans la liste d'amis dynamique ;
le client apte à filtrer des informations de présence de la liste d'amis dynamique sur la base d'une fréquence de contact avec l'entrée particulière et le paramètre de fréquence respectif ; et
le client programmé pour proposer des types de messages à envoyer à au moins un récepteur sur la base d'au moins une capacité de réception du récepteur, dans lequel les types de messages proposés sont basés sur un type de contenu de message.

2. Dispositif de communication portable (110, 112) selon la revendication 1, dans lequel le client comprend des moyens prévus pour envoyer au moins un message sur la base d'un dénominateur commun.

3. Dispositif de communication portable (110, 112) selon l'une quelconque des revendications 1 à 2, dans lequel le client supporte des groupes d'amis multiples.

4. Dispositif de communication portable (110, 112) selon l'une quelconque des revendications 1 à 3, dans lequel le client est programmé pour supporter la liste d'amis dynamique.

5. Dispositif de communication portable (110, 112) selon la revendication 4, dans lequel la liste d'amis dynamique comprend le filtrage d'information de présence sur la base de la fréquence de contact avec un récepteur (302, 304, 306, 308, 310, 312).

6. Dispositif de communication portable (110, 112) selon la revendication 4 ou 5, dans lequel la liste d'amis dynamique comprend l'ajout automatique d'un récepteur à la liste d'amis dynamique quand au moins un message est envoyé.

7. Dispositif de communication portable (110, 112) selon l'une quelconque des revendications 1 à 3, dans lequel le client est programmé pour détecter au moins un récepteur (302, 304, 306, 308, 310, 312)) à l'aide d'une technique d'échange appariée sans fil.

8. Dispositif de communication portable selon l'une quelconque des revendications 1 à 7, dans lequel le type de contenu des messages est au moins un contenu sous forme audio, vidéo, de texte, ou d'image.

9. Dispositif de communication portable selon l'une quelconque des revendications 1 à 8, dans lequel le client est programmé pour envoyer au moins un message à au moins un récepteur (302, 304, 306, 308, 310, 312) après une temporisation.

10. Dispositif de communication portable selon l'une quelconque des revendications 1 à 9, dans lequel le client est programmé pour stocker au moins un message en mémoire quand le fonctionnement est en mode désactivé.

11. Dispositif de communication portable selon l'une quelconque des revendications 1 à 10, dans lequel au moins un message stocké dans la mémoire est envoyé quand le client est connecté au serveur.

12. Serveur (102) conçu pour recevoir au moins un message depuis un dispositif de communication, le dispositif de communication comprenant un client, le serveur (102) comprenant :
- au moins une entité logicielle programmée pour accepter au moins un message depuis le dispositif de communication ;
- au moins une entité logicielle programmée pour transmettre le message à au moins un récepteur, au moins un message composé par le client sur la base d'au moins une capacité de réception du récepteur, dans lequel au moins une capacité de réception du récepteur est basée sur un type de contenu des messages ;
**caractérisé par** au moins une entité logicielle programmée pour afficher un paramètre de fréquence, dans laquelle l'utilisateur peut configurer un nombre d'interactions requises pour inclure une entrée particulière dans la liste d'amis dynamique et à filtrer les informations de présence de la liste d'amis dynamique sur la base d'une fréquence de contact avec l'entrée particulière et le paramètre de fréquence respectif.

13. Serveur (102) selon la revendication 12, dans lequel la liste d'amis dynamique est conservée par le serveur (102).

14. Procédé selon l'une quelconque des revendications 12 à 13, dans lequel le dispositif de communication est un dispositif de communication portable selon l'une quelconque des revendications 1 à 7.

15. Procédé selon l'une quelconque des revendications 12 à 14, dans lequel le type de contenu des messages est au moins un contenu sous forme audio, vidéo, de texte, ou d'image.
